# EUROPÄISCHE PATENTSCHRIFT

(11) **EP 0 482 365 B1**
(45) Veröffentlichungstag und Bekanntmachung des Hinweises auf die Patenterteilung: **22.11.1995**
(21) Anmeldenummer: 91116185.9
(22) Anmeldetag: 24.09.1991
(51) Int. Cl.: H01F 27/245, B23K 31/02, H01F 41/02

(54) **Blechschnitt mit zu verschweissenden Blechteilen und Blechkern aus solchen Blechschnitten**
Cut of sheet metal comprising sheet-metal-elements for welding, and laminated core fabricated by such elements
Coupe de tôles consistant en éléments de tôles à souder, ainsi que noyau en tôles constitué de tels éléments

(30) Priorität: 25.10.1990 DE 4033910
(43) Veröffentlichungstag der Anmeldung: 29.04.1992
(73) Patentinhaber: GEBR. WAASNER ELEKTROTECHNISCHE FABRIK GmbH & Co., D-91301 Forchheim (DE)
(72) Erfinder: Waasner, Bruno, Dipl.-Ing., W-8550 Forchheim/Ofr. (DE)
(74) Vertreter: Böhme, Volker, Dipl.-Ing.

(56) Entgegenhaltungen:
- GB-A- 2 131 626
- PATENT ABSTRACTS OF JAPAN vol. 7, no. 214 (E-199)(1359) 21. September 1983
- PATENT ABSTRACTS OF JAPAN vol. 14, no. 380 (E-965)(4323) 16. August 1990

## Beschreibung

Die Erfindung betrifft einen Blechschnitt mit zwei zu verschweißenden Blechteilen, die mit Stirn- und Seitenkanten zwei Stoßfugen bildend auf dichte Berührung aneinandergelegt sind, bei dem jede Stoßfuge nach außen hin in einer fiktiven Schweißstelle endet und die beiden Schweißstellen beiderseits der Bereiche dichter Berührung liegen, und bei dem die Stoßfugen bei jeder Schweißstelle als ein Engspalt von 0,01 bis < 0,1 mm ausgebildet sind.
Die Erfindung betrifft auch einen aus solchen Blechschnitten hergestellten Blechkern mit zwei verschweißten Blechpaketen, die mit Stirn- und Seitenflächen zwei Stoßfugen bildend auf dichte Berührung aneinandergelegt sind, bei dem jede Stoßfuge nach außen hin in einer Schweißnaht endet und die beiden Schweißnähte beiderseits der Bereiche dichter Berührung liegen, wobei die Stirn- und Seiten Kanten an den Berührungsstellen unter Spannung gegeneinander gedrückt sind.

Wenn ein geschweißter EI-Blechkern hergestellt wird, bei dem das I-Blechpaket mit einer Seitenfläche den Stirnflächen der drei Schenkel zugeordnet ist, so werden die Blechpakete zum Legen der Schweißnähte dicht aneinandergedrückt und zusammengehalten. Wenn die Schweißnähte gelegt sind, dann sind die drei Trennfugen - abgesehen von den Bereichen der Schweißnähte - zu Haarspalten aufgeweitet, welche beim fertigen Transformator den Leerlaufstrom vergrößern und die Leistung verkleinern. Auch kann sich der Mittelschenkel gegenüber dem Joch, d.h. dem I-Blechpaket, bewegen, was mit einem Brummgeräusch des Transformators verbunden ist. Um dieses Brummgeräusch zu unterbinden, können die Blechpakete miteinander verklebt werden oder ist es bekannt (DE-B-33 18 370), am I-Blechpaket kleine Nasen vorzusehen, die am Mittelschenkel unter Verformung angreifen. Dies ist umständlich und verhindert ebenso wie das Verkleben den vergrößerten Leerlaufstrom bzw. die verkleinerte Leistung nicht.

Ein bekannter (JA-A-58-106 812) Blechschnitt der eingangs genannten Art ist ein EI-Blechschnitt, wobei bei einem solchen EI-Blechschnitt das vom I-Teil gebildete Joch und das vom E-Teil gebildete Joch im Bereich der Fenster normalerweise gleich breit gehalten sind. Die Außenschenkel und der Mittelschenkel des EI-Blechschnitts sind gleich lang. Die beiden Engspalten sind bei den Außenschenkeln vorgesehen und jeweils gebildet, indem an der Seitenkante des I-Teils beim Mittelschenkel ein vorspringendes Teil gebildet ist. Das I-Teil weist von den freien Enden bis zum Mittelschenkel eine gleichbleibende Weite auf, die gleich der Breite des Joches des E-Teils ist. Die in Richtung der Schenkel verlaufende Länge der Fenster ist also um das vorspringende Teil vergrößert.

Eine Aufgabe der Erfindung ist es daher, einen Blechschnitt und einen Blechkern der eingangs genannten Art zu schaffen, bei dem eine Verbesserung der Leistung bzw. Verkleinerung des Leerlaufstromes eines damit hergestellten Transformators dadurch gegeben ist, daß die beiden Blechteile bzw. Blechpakete nach dem Verschweißen im Berührungsbereich unter Spannung dicht aneinandergedrückt sind.
Der erfindungsgemäße Blechschnitt weist, diese Aufgabe lösend, die Kennzeichnenden Merkmale des Patentanspruchs 1 auf.
Der erfindungsgemäße Blechkern weist, diese Aufgage lösend, die Kennzeichnenden Merkmale des Patentanspruchs 5 auf.

Bei dem erfindungsgemäßen Blechkern, der aus erfindungsgemäßen Blechschnitten besteht, sind an den Berührungsstellen keine Engspalte entstanden, sondern ist eine satte Anlage erreicht, so daß der Mittelschenkel eines EI-Blechkernes nicht mehr schwingen kann. Auch dort, wo die Blechschnitte zunächst die bewußt vorgesehenen Engspalte aufweisen, ist durch das Verschweißen eine Verringerung der Spaltbreite erreicht. Die schrumpfenden Schweißnähte nehmen die Stoßfugen-Bereiche enger Berührung zwischen sich auf und nutzen diese als Widerlager für eine Hebelwirkung. Für einen erfindungsgemäßen Blechkern ergeben sich bezüglich Leerlaufstrom und Leistung beachtlich, z.B. bis zu 20% bessere Verhältnisse als für einen gleichen Blechkern ohne die Engspalte der Blechschnitte. Eine denkbare Erklärung für diese Wirkung der Erfindung besteht in folgendem: Beim Legen der Schweißnähe kann das sich erhitzende Material in die Engspalte ausweichen und drückt die beiden Blechpakete nicht auseinander. Beim Erkalten der Schweißnähte schrumpfen diese und ziehen die Blechpakete aufeinander zu. Bei dreischenkeligen Blechkernen ist ein Brummgeräusch durch den Mittelschenkel vermieden und zwar ohne zusätzliche mechanische Maßnahme. Die Verbesserung der Leerlaufstrom- bzw. Leistungs-Verhältnisse ist unabhängig von der Schenkelzahl der Blechkerne gegeben.

Bei der erfindungsgemäßen Gestaltung sind Vorsprünge oder Eingriffe an den Stirn- und Seitenkanten bzw. den Stirn- und Seitenflächen vermieden und sind diese insoweit plan bzw. glatt. Auch an Stoßfugen sind vor- und zurückspringende Blechteile, die bei einem bekannten (DE-A-33 27 239) Blechkern im Zusammenhang mit dem hier behandelten Problem vorgesehen sind, vermieden. Während des Legens der Schweißnähte werden die Blechpakete im Bereich der Schweißnähte gegeneinandergepreßt. Die Schweißnähte brennen sich in das Material ein. Es wird in der Regel ohne Zugabe von Material geschweißt. Die Erfindung ist jedoch auch wirksam, wenn die Schweißnähte unter Zugabe von Material gelegt werden. Bei kleineren Blechschnitten wird der Engspalt kleiner, z.B. 0,02 mm, sein und bei größeren Blechschnitten wir der Engspalt größer, z.B. 0,05 mm, sein. Der aufgeweitete Engspalt erstreckt sich in der Regel mindestens auf die Hälfte der Stoßfugenlänge. Die Engspalte werden entweder gleich beim Stanzen der Blechteile mit vorgesehen oder nachträglich durch Abschleifen hergestellt. In der Regel weist der Blechschnitt nur zwei Blechteile auf, obwohl es auch denkbar ist, die Erfindung an einem Blechschnitt mit drei oder mehr Blechteilen zu verwirklichen. Der Blechschnitt bildet mindestens die zwei zu Engspalten erweiterten Stoßfugen und kann eine oder mehrere weitere Stoßfugen aufweisen.

Besonders zweckmäßig und vorteilhaft ist es, wenn der Blechschnitt oder der Blechkern aus kornorientiertem Blech besteht. Bei kornorientiertem Blech tritt die Wirkung der erfindungsgemäßen Maßnahme, nämlich die Verringerung des Leerlaufstromes, besonders ausgeprägt auf.

Wenn eine dreischenkelige Ausbildung und die Schweißstellen an den beiden Außenschenkeln vorgesehen sind, ist es besonders zweckmäßig und vorteilhaft, wenn die beiden Engspalten sich jeweils mit gleicher Breite über den gesamten Schenkel erstrecken. Dies läßt sich vereinfacht erzeugen und bewirkt eine verbesserte Festlegung des Mittelschenkels, weil die Schrumpfung der Schweißnähte die Pressung an der Trennfuge des Mittelschenkels verbessern kann.

Besonders zweckmäßig und vorteilhaft ist es auch, wenn der Engspalt sich von einer größten Breite an der Außenseite in der Breite nach innen hin vermindert. Diese, in der Regel keilförmige, Ausbildung des Engspaltes wird in der Regel bei zweischenkeligen Blechschnitten und Blechkernen vorgesehen. Durch die schrumpfenden Schweißnähte werden die Blechpakete an den von Engspalt freien Trennfugen-Stellen jeder Trennfuge gegeneinander gepreßt und wird die Breite der sich verjüngenden Engspalte verringert.

In der Zeichnung sind bevorzugte Ausführungsformen der Erfindung dargestellt und zeigt
- Fig. 1: eine perspektivische Ansicht eines dreischenkeligen Blechkernes vor dem Verschweißen,
- Fig. 2: ein I-Blechteil eines Blechschnittes des Blechkernes gemäß Fig. 1,
- Fig. 3: ein E-Blechteil des Blechschnittes zu Fig. 2 des Blechkernes gemäß Fig. 1,
- Fig. 4: eine Vorderansicht eines zweiten dreischenkeligen Blechkernes im verschweißten Zustand,
- Fig. 5: eine Vorderansicht eines dritten dreischenkeligen Blechkernes im verschweißten Zustand,
- Fig. 6: eine Vorderansicht eines zweischenkeligen Blechkernes im verschweißten Zustand und
- Fig. 7: eine Vorderansicht eines zweiten zweischenkeligen Blechkernes im verschweißten Zustand.

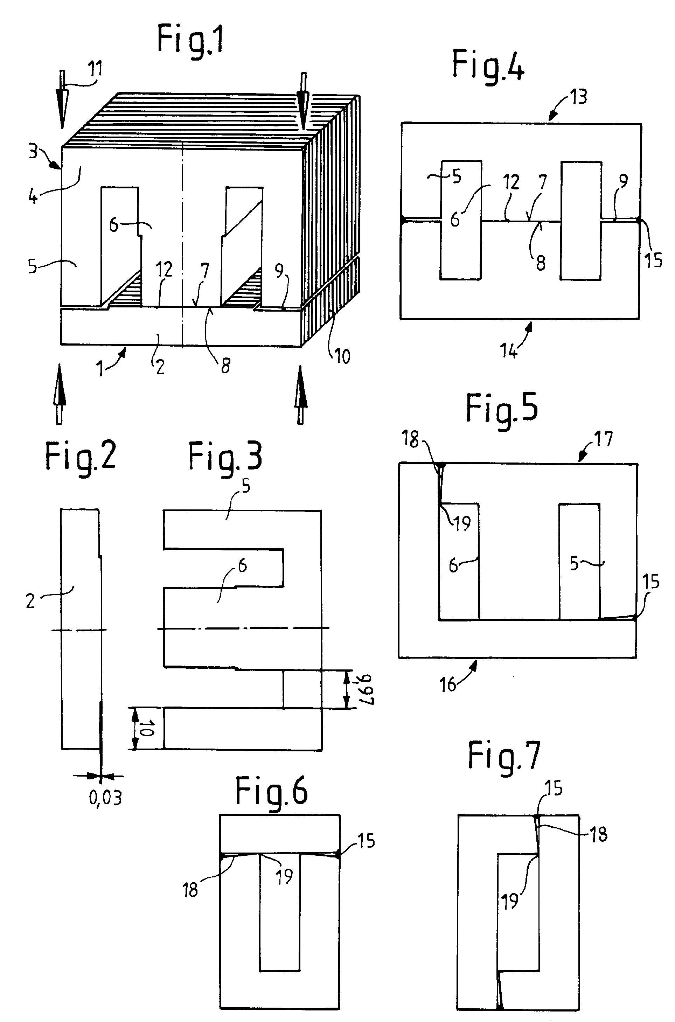

Der Blechkern gemäß Fig. 1 besteht aus einem I-Blechpaket 1, das aus I-Blechteilen 2 geschichtet ist, und aus einem E-Blechpaket 3, das aus E-Blechteilen 4 geschichtet ist. Jedes E-Blechteil 4 weist zwei Außenschenkel 5 auf, die an Trennfugen enden die von einer Ausnehmung im I-Blechteil 2 gebildet sind, wogegen ein Mittelschenkel 6 mit einer Stirnkante 7 dicht anliegend auf eine Seitenkante 8 des I-Blechteiles 2 aufgestoßen ist. Aufgrund der Ausnehmungen ist die Stoßfuge jedes Außenschenkels 5 als Engspalt 9 ausgebildet, der über seine Länge hin gleich breit ist. Zum Legen vom Schweißnähten entlang äußeren Enden 10 der Engspalte 9 werden die beiden Blechpakete 1, 3 gemäß den Pfeilen 11 im Bereich der Schweißnähte zusammengedrückt, was bereits zu einer Verringerung der Breite der bewußt vorgesehenen Engspalte 9 führt. Fig. 2 und 3 verdeutlichen das I-Blechteil 2 und das E-Blechteil 4 und die Bildung der Engspalten 9 bei einem materialsparenden Blechschnitt, bei dem zwei I-Blechteile beim Stanzen der Fenster zweier E-Blechteile anfallen. Es ist auch denkbar, das I-Blechteil frei vom Ausnehmungen zu lassen und die beiden Außenschenkel um die Breite des Engspaltes kürzer zu machen als den Mittelschenkel. Der Blechkern gemäß Fig. 1 weist drei Stoßfugen auf, wobei der dem Mittelschenkel 6 zugeordneten Stoßfuge 12 auf dichte Berührung aneinandergelegte Stirn- und Seitenkanten zugeordnet sind und die beiden anderem Stoßfugen zu den Engspalten 9 aufgeweitet sind.

Gemäß Fig. 4 sind zwei E-Blechpakete 13, 14 zu einem Blechkern zusammengefügt, wobei die drei Stoßfugen, wie bei der Ausführungsform gemäß Fig. 1, in einer geraden Linie liegen und die beiden Engspalte 9 und die Stoßfuge 12 mit dem dichten Aneinanderdruck der Blechpakete zwischen sich aufnehmen. Bei diesem Blechkern sind die beiden Schweißnähte 15 bzw. Schweißstellen zu sehen. Auch hier verlaufen die Engspalte 9 mit gleicher Breite über die gesamte Breite der Stoßfuge bzw. der Außenschenkel 5. Gemäß Fig. 5 sind ein F-Blechpaket 16 und ein L-Blechpaket 17 zusammengefügt. Der Mittelschenkel 6 wird vom F-Blechpaket 17 gebildet und stößt, die dichte Stoßfuge 12 bildend, gegen das vom L-Blechpaket 16 gebildete Joch. Die den Außenschenkeln zugeorndeten Stoßfugen sind rechtwinkelig zueinander angeordnet und den beiden Jochen zugeordnet und sind als Engspalte 18 ausgebildet, die an der Außenseite eine größte Breite aufweisen und sich über die Breite der Trennfuge bis zum Fenster in der Breite verjüngen. Auch diese beiden Trennfugen bilden also Bereiche 19 enger Berührung und die erkaltende schrumpfende Schweißnaht 15 führt dazu, daß die beiden Blechpakete 16, 17 verstärkt gegeneinander gezogen werden.

Gemäß Fig. 6 und 7 sind zweischenkelige Blechkerne vorgesehen, deren beiden Trennfugen jeweils als sich in der Breite verjüngender Engspalt 18 ausgebildet sind, der beim Fenster den Bereich 19 enger Berührung bildet. Auch hier liegen die Engspalte 18 beiderseits der Bereiche 19 enger Berührung und finden die zusammenziehenden Kräfte der schrumpfenden Schweißnähte 15 an den Bereichen 19 enger Berührung ein Widerlager, so daß sie mit Hebelwirkung angreifen.

## Patentansprüche

1. Blechschnitt mit zwei zu verschweißenden Blechteilen (2,4), die mit Stirn- und Seitenkanten zwei Stoßfugen bildend auf dichte Berührung aneinandergelegt sind, bei dem jede Stoßfuge nach außen hin in einer fiktiven Schweißstelle (15) endet und die beiden Schweißstellen beiderseits der Bereiche (12) dichter Berührung liegen, und bei dem die Stoßfugen bei jeder Schweißstelle (10) als ein Engspalt (9) von 0,01 mm bis < 0,1 mm ausgebildet sind,
**dadurch gekennzeichnet,**
daß die beiden Engspalte (9) jeweils durch eine als Ausnehmung oder Kürzung an den die Stoßfugen bildenden Stirn- oder Seitenkanten gestaltete Aufweitung bis zu 0,06 mm vorgesehen sind, die sich in das Innere der Stoßfuge um mindestens ein Drittel der Stoßfugenlänge erstreckt und im wesentlichen auf die Stoßfugenlänge beschränkt ist.

2. Blechschnitt nach Anspruch 1, **dadurch gekennzeichnet,** daß er aus kornorientiertem Blech besteht.

3. Blechschnitt nach Anspruch 1 oder 2, **dadurch gekennzeichnet,** daß eine dreischenkelige Ausbildung und die Schweißstellen an den beiden Außenschenkeln vorgesehen sind und daß die beiden Engspalten (9) sich jeweils mit gleicher Breite über den gesamten Schenkel (5) erstrecken.

4. Blechschnitt nach Anspruch 1 oder 2, **dadurch gekennzeichnet,** daß der Engspalt (18) sich von einer größten Breite an der Außenseite in der Breite nach innen hin vermindert.

5. Blechkern mit zwei verschweißten Blechpaketen (1,3), die mit Stirn- und Seitenflächen zwei Stoßfugen bildend auf dichte Berührung aneinandergelegt sind,
bei dem jede Stoßfuge nach außen hin in einer Schweißnaht (15) endet und die beiden Schweißnähte beiderseits der Bereiche (12) dichter Berührung liegen,
wobei die Stirn- und Seitenkanten (7,8) an den Berührungsstellen unter Spannung gegeneinander gedrückt sind,
**dadurch gekennzeichnet,**
daß die Schweißnähte jeweils an eine Stoßfuge gesetzt sind, die als ein Engspalt (9) von 0,01 bis < 0,1 mm ausgebildet ist, und
daß die beiden Engspalten (9) jeweils durch eine als Ausnehmung oder Kürzung an den die Stoßfugen bildenden Stirn- oder Seitenkanten gestaltete Aufweitung bis zu 0,06 mm vorgesehen sind, die sich in das Innere der Stoßfuge um mindestens ein Drittel der Stoßfugenlänge erstreckt und im wesentlichen auf die Stoßfugenlänge beschränkt ist.

6. Blechkern nach Anspruch 5, **dadurch gekennzeichnet,** daß er aus kornorientiertem Blech besteht.

7. Blechkern nach Anspruch 5 oder 6, **dadurch gekennzeichnet,** daß eine dreischenkelige Ausbildung und die Schweißnähte an den beiden Außenschenkeln vorgesehen sind, und daß die beiden Engspalten (9) sich jeweils mit gleicher Breite über den gesamten Schenkel (5) erstrecken.

8. Blechkern nach Anspruch 5 oder 6, **dadurch gekennzeichnet,** daß der Engspalt (18) sich von einer größten Breite an der Außenseite in der Breite nach innen hin vermindert.

## Claims

1. A sheet-metal blank having two sheet-metal parts (2, 4) which are to be welded and are placed against one another in intimate contact with end and side edges forming two joint gaps, in which each joint gap ends towards the outside in an imaginary weld point (15) and the two weld points lie on either side of the regions (12) in intimate contact, and in which the joint gaps at each weld point (10) are constructed as a narrow gap (9) of 0.01 to < 0.1 mm, characterized in that the two narrow gaps (9) are each provided by a widened portion of up to 0.06 mm, which is in the form of a cutout or truncation at the end or side edges forming the joint gaps and which extends into the interior of the joint gap by at least a third of the length of the joint gap and is substantially restricted by the length of the joint gap.

2. A sheet-metal blank according to Claim 1, characterized in that it is of grain-oriented sheet metal.

3. A sheet-metal blank according to Claim 1 or 2, characterized in that a three-limbed construction is provided and the weld points are provided at the two outer limbs, and in that the two narrow gaps (9) each extend over the entire limb (5) with the same width.

4. A sheet-metal blank according to Claim 1 or 2, characterized in that the narrow gap (18) is reduced in width towards the inside from a maximum width at the outer side.

5. A laminated core having two welded laminated core stacks (1, 3) which are placed against one another in intimate contact with end and side edges forming two joint gaps, in which each joint gap ends towards the outside in a weld seam (15) and the two weld seams lie on either side of the regions (12) in intimate contact, the end and side edges (7, 8) being pressed under tension against one another at the contact points, characterized in that the weld seams are each positioned at a joint gap which is constructed as a narrow gap (9) of 0.01 to < 0.1 mm, and in that the two narrow gaps (9) are each provided by a widened portion of up to 0.06 mm, which is in the form of a cutout or truncation at the end or side edges forming the joint gaps and which extends into the interior of the joint gap by at least a third of the length of the joint gap and is substantially restricted by the length of the joint gap.

6. A laminated core according to Claim 5, characterized in that it is of grain-oriented sheet metal.

7. A laminated core according to Claim 5 or 6, characterized in that a three-limbed construction is provided and the weld seams are provided at the two outer limbs, and in that the two narrow gaps (9) each extend over the entire limb (5) with the same width.

8. A laminated core according to Claim 5 or 6, characterized in that the narrow gap (18) is reduced in width towards the inside from a maximum width at the outer side.

## Revendications

1. Flan de tôle comprenant deux parties de tôle (2,4) à souder, qui sont appuyées l'une contre l'autre en contact serré par leurs bords frontaux et latéraux en formant deux lignes de joint, dans lequel chaque ligne de joint se termine vers l'extérieur par une zone de soudure fictive (15) et les deux zones de soudure se trouvent de part et d'autre des régions (12) de contact serré, et dans lequel les lignes de joint sont constituées dans chaque zone de soudure (10) par une fente étroite (9) de 0,001 mm à <0,1 mm ,
caractérérisé,
en ce que les deux fentes étroites (9) sont formées chacune par un élargissement allant jusqu'à 0,06 mm, constitué par un évidement ou un raccourcissement au droit des bords frontaux ou latéraux formant les lignes de joint, élargissement qui se prolonge dans l'intérieur de la ligne de joint sur au moins un tiers de la longueur de la ligne de joint, et est essentiellement limité à la longueur de la ligne de joint.

2. Flan de tôle suivant la revendication 1, caractérisé en ce qu'il est formé de tôles à cristaux orientés.

3. Flan de tôle suivant la revendication 1 ou 2, caractérisé en ce qu'il est prévu une conformation à trois branches et les zones de soudure sont prévues au droit des deux branches extérieures et en ce que les deux fentes étroites (9) s'étendent chacune avec la même largeur sur toute la branche (5).

4. Flan de tôle selon la revendication 1 ou 2, caractérisé en ce que la fente étroite (18) décroît en largeur vers l'intérieur en partant d'une largeur maximum située au droit du côté extérieur.

5. Noyau feuilleté comprenant deux paquets de tôles soudés (1,3) qui sont appuyés l'un contre l'autre en contact serré, en formant deux lignes de joint par leurs surfaces frontales et latérales,
dans lequel chaque ligne de joint se termine vers l'extérieur par une soudure, et les deux soudures se trouvent de part et d'autre des régions ((12) de contact serré, les bords bords frontaux (7,8) étant serrés l'un contre l'autre sous tension aux zones de contact.
caractérisé en ce que les soudures sont formées chacune à une ligne de joint qui est constituée par une fente étroite (9) de 0,01 à< 0,1 mm; et
et en ce que les deux fentes étroites (9) sont constituées par un élargissement jusqu'à 0,06 mm formé par un évidement ou un raccoucissement aux bords frontaux ou latéraux formant les lignes de joint, et qui s'étend sur au moins un tiers sur de la longueur de la ligne de joint en se prolongeant dans l'intérieur de la ligne de joint et est sensiblement limité à la longueur de la ligne de joint.

6. Noyau feuilleté selon la revendication 5, caractérisé en ce qu'il est composé de tôles à cristaux orientés.

7. Noyau feuilleté selon la revendication 5 ou 6, caractérisé en ce qu'il est prévu une configuration à trois branches et les soudures sont prévues sur les branches extérieures, et en ce que les deux fentes étroites (9) s'étendent chacune avec une largeur constante sur toute l'étendue de la branche (5).

8. Noyau feuilleté selon la revendication 5 ou 6, caractérisé en ce que la fente étroite (18) diminue en largeur vers l'intérieur en partant d'une largeur maximum située au droit du côté extérieur.
